(19) Europäisches Patentamt
European Patent Office
Office européen des brevets

(11) Publication number: **0 297 451**
**A1**

(12) **EUROPEAN PATENT APPLICATION**

(21) Application number: **88110091.1**

(22) Date of filing: **24.06.88**

(51) Int. Cl.4: **C09J 3/16 , C08G 73/04 , C08L 79/02**

(30) Priority: **29.06.87 US 67707**

(43) Date of publication of application:
**04.01.89 Bulletin 89/01**

(84) Designated Contracting States:
**AT BE CH DE ES FR GB GR IT LI LU NL SE**

(71) Applicant: **H.B. FULLER COMPANY**
**2400 Energy Park Drive**
**St. Paul Minnesota 55108(US)**

(72) Inventor: **Knutson, Keith C.**
**907 46-1/2 Avenue NE**
**Columbia Heights, MN 55421(US)**
Inventor: **Bunnelle, William L.**
**703 West Hickory Street**
**Stillwater, MN 55082(US)**
Inventor: **Simmons, Eugene R.**
**2709 East Maryland**
**Maplewood, MN 55119(US)**
Inventor: **Scholl, Steven L.**
**7586 Inskip Trail**
**Cottage Grove, MN 55016(US)**

(74) Representative: **Eisenführ & Speiser**
**Martinistrasse 24**
**D-2800 Bremen 1(DE)**

(54) **Hot melt adhesive comprising an N-substituted polyalkyleneimine and acid functional component.**

(57) A hot melt adhesive composition can be made by blending an N-substituted polyalkyleneimine with an acid functional compound

EP 0 297 451 A1

# HOT MELT ADHESIVE COMPRISING AN N-SUBSTITUTED POLYALKYLENEIMINE AND ACID FUNCTIONAL COMPONENT

## Field of the Invention

The invention relates to a novel class of hot melt adhesives that can have pressure sensitive properties. The adhesives of this invention can be water actuated. In other words, the adhesives can be activated by moisture, can be water soluble, can be alkali dispersible, can by recycled with paper products to which they are applied and can be easily cleaned, solubilized, or dispersed by the action of aqueous cleaners and water. Further, the adhesives of the invention have additional properties such as the ability to resist the action of many non-aqueous solvents, to adhere firmly to hard-to-glue surfaces, to resist decomposition at high hot melt temperatures, etc.

## Background of the Invention

Hot melt adhesives are applied to a substrate at elevated temperatures in a melt form, in the substantial absence of a solvent. Upon contact with a substrate the hot melt adhesive can cool, solidify, and form a strong bond.

Hot melt adhesives can be pressure sensitive or non-pressure sensitive, depending upon formulation, are useful for many applications and have many advantages associated with them. However, they also involve certain drawbacks. Typically, the class of hot melt adhesives most commonly used tend to be water resistant or insoluble in water. As such, they are not easily removed from substrates such as corrugated board or polyethylene bottles during aqueous recycling processes. Typical hot melt adhesives can have poor adhesion to certain fluorocarbon materials and polyester materials. Further many hot melt adhesives have poor thermal stability at elevated hot melt temperature.

Water-soluble, water-sensitive, water-activated adhesives have potential applications and a variety of end uses including label stock, envelope gum, "POST-IT™" notes, stamp gum, bindery tapes, sealing tapes, repulpable adhesives, general pressure-sensitive hot melts, non-pressure sensitive hot melts, roll wrap adhesives, carton sealing adhesives, paper-to-paper adhesives, contact lens blocking or mounting adhesives, and in other applications.

The most common water soluble hot melt adhesives are based on polymers containing vinyl pyrrolidone or other vinyl heterocyclic monomers as taught by Colon et al in U.S. Pat. Nos. 4,331,576 and 4,325,851. These adhesives are made from vinyl pyrrolidone polymers, vinyl pyrrolidone/vinyl acetate copolymers, and other vinyl pyrrolidone based polymers. Another class of water sensitive hot melt adhesives include the polyester-based adhesives typically comprising a copolyester in combination with a plasticizer, which are disclosed in Morrison, U.S. Pat. No. 4,052,368 and in Harrington, Jr., et al, U.S. Pat. No. 4,172,824.

A substantial need exists for a hot melt adhesive composition that can be readily solubilized or dispersed in aqueous alkali so that it can be cleaned or repulped in common recycling processes, and that can be water insoluble in certain formulations, can be substantially heat stable, can form strong permanent bonds, and can be formulated to be moisture activated or pressure-sensitive.

## Brief Description of the Invention

We have found that an exceptional hot melt adhesive composition having high temperature stability can be prepared by blending an N-acyl-polyalkyleneimine, preferably a polyalkyloxazoline polymer, with an acid functional compound. The polyalkyloxazoline polymers are N-acyl substituted polyalkyleneimine polymers, which for simplicity, will be referred to as a polyalkyleneimine. The polyalkyleneimine polymers are disclosed by Levy et al, U.S. Pat. No. 3,464,933; Litt et al, U.S. Pat. No. 3,483,141; Levy et al, U.S. Pat. No. 3,483,145; and Fuhrmann et al, U.S. Pat. No. 3,737,194, the disclosures of which are hereby incorporated by reference herein. These patents teach polymers having recurring units of the general structure:

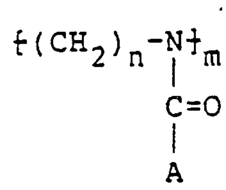

wherein A is $-R_3-(OR_2)_p-OR$,

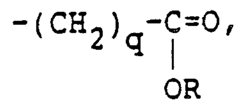

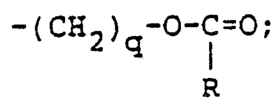 or

-R

wherein N is about 2-6, p is about 0-3, q is about 1-15, R is a $C_1$-$C_{15}$ substantially hydrocarbon radical such as alkyl, substituted alkyl, etc., including such groups as methyl, ethyl, propyl, isopropyl, isobutyl, tert-butyl, pentyl cyclohexyl, 2-ethyl-hexyl, dodecyl, pentadecyl, chloromethyl, fluoroethyl; and $R_2$ and $R_3$ are selected from the group consisting of divalent hydrocarbon and substituted hydrocarbon radicals such as alkylene and arylene. Specific examples of $R_2$ and $R_3$ groups include methylene, ethylene, tetramethylene, chloroethylene, fluoroethylene, and chlorophenylene.

Levy et al, Litt et al, and Fuhrmann et al teach that polymers having side chains resulting in water solubility can be used as adhesives. However, these patents do not teach that the polyalkyleneimines can be combined with hydroxy organic components, acid functional components, or other components that yield hot melt adhesives.; further, the patents fail to show that the polyalkyleneimine polymers can be combined with other components to form pressure sensitive or moisture activated adhesives which are stable in high temperatures.

## Brief Discussion of the Invention

The hot melt adhesives of the invention comprise a polyalkyloxazoline (polyalkyleneimine) polymer and acid functional component. An optional third component can be a wax, a plasticizer, a tackifier, a compatible polymer, or mixtures thereof. The optional components can preferably have an acid number between about 50 and 300. Alternatively, the third optional component can have a hydroxy number of at least 150.

The polyalkyleneimine has the formula

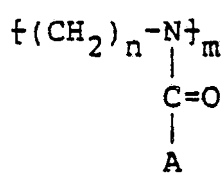

wherein n is about 2-3, m is about 100-10,000, and A is $-R_3-(OR_2)_pOR$, $-(CH_2)_qCO_2R$, $-(CH_2)_qO_2CR$ or R, q is about 1-15, p is about 0-3, R is $C_1$-$C_{15}$ alkyl, or substituted alkyl, and $R_2$ and $R_3$ are $C_{1-15}$ alkylene. The composition can include about 5-75 wt-% of the polyalkyleneimine, about 5-75 wt-% of a carboxylic acid functional compound, about 0-50 wt-% of the tackifying resin, and about 0-60 wt-% of a plasticizer and an effective amount of other adhesive components.

Another aspect of the invention is a water releasable thermally stable pressure sensitive hot melt

adhesive composition. The composition comprises about 5-75 wt-% of the polyalkyleneimine as described previously, about 1-50 wt-% of a carboxylic acid compound having an acid number of at least 50, about 20-40 wt-% of a plasticizer, about 5-50 wt-% of a tackifying resin, and optionally other adhesive compositions.

A further aspect of the invention is a moisture activated hot melt adhesive composition. This composition comprises about 5-75 wt-% of the polyalkyleneimine described previously, about 1-45 wt-% of a carboxylic acid functional compound, about 1-25 wt-% of an inorganic filler and optionally other adhesive components.

An additional aspect of the invention is a water soluble hot melt general purpose adhesive composition. This composition comprises about 5-75 wt-% of a polyalkyleneimine of the formula described previously, about 5-50 wt-% of a tackifying resin about 1-45 wt-% of a carboxylic acid compound and optionally other adhesive components.

Additional aspects of the invention are articles comprising a substrate having an effective bond of the claimed adhesive compositions, and methods of applying the claimed compositions.

## Detailed Description of the Invention

The adhesives of the invention contain a polyalkyleneimine, in combination with at least one component compound having a carboxylic acid functional group resulting id number for the component compound of at least 75. An N-substituted polyalkyleneimine which can be used in the adhesives of this invention is commonly prepared by the polymerization of heterocyclic monomers of the general formula I:

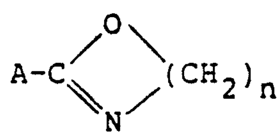

(I)

wherein A and n are as defined above. The polymers and polymerization techniques are in general as disclosed in U.S. Pat. Nos. 3,483,151 and 3,293,245, the disclosures of which are incorporated by reference herein.

Preferred polyalkyleneimines include polyethyleneimines and polypropyleneimines which are prepared by polymerizing heterocyclic monomers of the formula I wherein n is 2 or 3. These polyalkylenenimines can be represented by the general formula II:

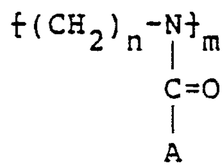

(II)

wherein A is as defined hereinabove, n is about 2-3 and m is about 50-100,000, preferably about 100-7500. Most preferably the heterocyclic monomer will comprise an alkyl substituted-2-oxazoline, i.e., n = 2 wherein A is $C_{1-15}$ alkyl. The molecular weights of the polymers derived from such monomers can range from less than 50,000 to 500,000 and above. The polymers are available in low (less than about 100,000), moderate (about 100,000 to 300,000) and high (greater than about 300,000) molecular weights. A molecular weight is selected generally to obtain a desired final viscosity. These polymers are soluble in water and many polar organic solvents, but can be advantageously insoluble in non-polar organic solvents. The polymers are thermally stable, low in solution viscosity, possess acceptable melt flow properties, and have low toxicity. The substituted polyalkyleneimine (polyoxazoline) polymers of this invention are available from the Dow Chemical Company.

The most preferred base polymer of this invention, for reasons of their low cost and high performance in adhesive applications, are polymers having the formula:

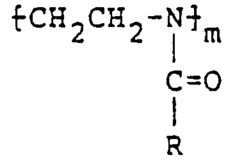

wherein m is as defined above and R is a $C_1$-$C_{12}$ alkyl such as methyl, ethyl, iso-propyl, t-butyl, cyclohexyl, cyclopentyl, methyl-cyclohexyl, dodecyl, and the like. Preferably, R will be an alkyl group having about 1-5 carbon atoms.

Other base polymer compositions can be added to the polyalkyleneimine to add to and to vary the polyalkyleneimine polymer properties. The additional base polymeric compositions are preferably compatible with the polyalkyleneimine polymer and other hot melt adhesive components, and are heat stable. Examples of useful additional polymer bases include polyolefin polymers, rubbery polymers, polyamide materials, polyester materials, acrylic polymers such as polyacrylamides, polyacrylates, polymethacrylates, poly(alkene-acrylic acid) copolymers, etc.

## Acid Functional Compounds

The adhesive compositions of the invention comprise an N-substituted polyalkyleneimine polymer composition in combination with an acid functional compound. Both large and small molecule acid functional compounds can be used in the adhesive composition. Small molecule acid functional compounds are typically organic molecules having a molecular weight of less than about 500 having at least one carboxylic acid ($-COH_2$) functional group or a functional group that can effectively generate a carboxylic acid group. The acid functional compound must be compatible with the N-substituted polyalkyleneimine in melt form, must be heat stable, and must not substantially contribute to unacceptably high adhesive viscosity. Examples of small molecule acid functional compounds include acid functional waxes, $C_{6-25}$ carboxylic acids, polymer substituted succinic acids and anhydrides, $C_{5-24}$ alkyl half esters of succinic acid, $C_2$-$C_8$ alpha-omega dicarboxylic acids, alkyl substituted and unsubstituted phthalic anhydride and half esters thereof, dimer fatty acids, free acid fatty acid derivatives, and others. The small molecule acid compounds are compatible with the N-substituted polyalkyleneimine polymers of the invention, and appear to promote the blendability of the substituted polyalkyleneimine polymers with other functional adhesive components.

The small molecule carboxylic acid functional compounds include carboxylic acids having an acid number of at least 75. Preferably the carboxylic acid compound will have an acid number of about 85 to 250. Preferably the acid number can range from about 120 and 190.

Acid functional polymeric compounds can also be used in the adhesives of the invention. Such compositions include polymers having a molecular weight of about 500 and greater having an acid number of at least 75. Typical examples of such acid containing polymers include polymers of acrylic acid, methacrylic acid, maleic anhydride, maleic acid, fumaric acid, vinyl benzoic acid, and other vinyl monomers containing at least one carboxylic acid functional group or carboxylic acid generating group such as an acid chloride or acid anhydride. Particular examples of such polymers include polyacrylic acid, polymethacrylic acid, ethylene acrylic acid or methacrylic acid copolymers, propylene methacrylic acid, styrene maleic anhydride polymers, carboxylated vinyl acetate polymers, carboxylated ethylene-vinyl acetate copolymers, and other carboxylic acid containing polymers well known to the skilled chemist.

## Hydroxy Substituted Organic Compound

The hot melt adhesives of this invention can contain a hydroxy substituted organic compound. The hydroxy substituted organic compound can be used to provide a number of functions to the composition. First, the combination of the organic properties and the hydroxy group in the compound promotes the formation of uniform homogeneous single phase compositions. Further, the hydroxy substituted organic compounds tend to produce adhesives with a workable viscosity, a controlled rate of set and heat resistance. Lastly, the blending of sufficient quantities of the hydroxy substituted organic compounds in the hot melt adhesives of this invention can substantially reduce (if desired) the pressure-sensitive properties of the adhesive. The important aspects of the hydroxy substituted organic compound is that it contains one or

more hydroxy groups attached to an essentially organic (or hydrocarbon) nucleus composition. The organic composition can be essentially aliphatic or aromatic. Many hydroxy substituted organic compounds exist including alcohols, hydroxy substituted waxes, hydroxy amide waxes (PARACIN 220) polyalkylene oxide polymers (such as CARBOWAX®), phenols and phenolics, and many others.

Preferred hydroxy substituted organic compounds include $C_{10}$-$C_{30}$ fatty alcohols, hydroxy substituted waxes, hydroxy substituted fats, hydroxy substituted fatty acids, hydroxy substituted fatty amides, diacetin, polyalkylene oxide polymers having a molecular weight of less than about 2000, preferably about 1000, such as polyethylene oxide, polypropylene oxide, and others. For compatibility purposes, we have found that the hydroxyl number of the hydroxy substituted organic compound should be at least 160 or preferably between 200 and 500, and that at a level of more than 20 wt-% of a $\leq$ 160 hydroxyl number, hydroxy wax, an effective amount, 5 to 10 wt-%, of a $C_{8-20}$ fatty acid, preferably a $C_{8-20}$ saturated fatty acid can be used in combination with the hydroxy compounds to optimize compatibility.

We have found that desirable adhesive formulations can be achieved where a composition is used that can have a high acid number, greater than about 50, or a hydroxy number greater than about 150. Preferably, the tackifier resin will be between about 85 and 200. The most desirable acid number appears to be between about 120 and 170. If the acid number is too low, the material can often be insufficiently compatible with the polyalkyleneimine, while if it is too high, we have found that the molten adhesive can have thermal stability problems.

## Tackifying Agent or Resin

The polyoxazoline polymer itself can have insufficient pressure-sensitive properties for certain applications. The addition of a compatible tackifying resin is commonly necessary to form a sufficiently adherent pressure-sensitive polymer blend.

Many tackifying agents such as resins or resin blends are well known in the art. Such resins include rosin acids, hydrogenated rosins, tall oil pitch heads (residue), ACINTOL or UNITOL® (Arizona Chemical), polyketones, polymerized mixed olefins, alkyl resins, phenolic resins, and terpene-phenolic resins. Especially preferred tackifying resins for use in the present compositions include the rosin acids (SYLVATAX®, RX Silvachem Company), phenolic resin SP103 (Schenectady Chemical Corp.), and terpene-phenolic resins such as the NIREZ® series, e.g. NIREZ® V-2040, V-2150 (Reichhold Chemicals, Inc., Pensacola, Florida), having a hydroxy number of at least about 150.

Suitable rosin acids, having the appropriate acid number, include the FORAL® AX acidic hydrogenated wood rosin available from Hercules Inc. Typical properties include a softening point of 75° C. by the Hercules drop method, a refractive index of 1.4960 at 100° C. and an abietic acid value of 0.15%. The product typically has an acid number of about 150. Another preferred resin is the DYMEREX® resin available from Hercules, Inc. This resin is composed predominantly of dimeric acids derived from rosin, and includes lesser amounts of monomeric resin acids and neutral materials of rosin origin. Typical properties include a softening point of 150° C. by the Hercules drop method, a saponification number of 145, an average molecular weight of about 502, a density of about 1.069 kilograms per liter at 20° C., 8% unsaponifiable material, and an acid number of about 145. Another suitable tackifying resin is the STAYBELITE® resin (partially hydrogenated wood rosin). We have found that use of the DYMEREX® resin can be preferable to use of the FORAL® AX resin for formulations such as envelope gums where adherence due to pressure blocking should be avoided.

## Plasticizer

Plasticizers are generally classified as materials which can be incorporated into another material to increase its workability, flexibility, or distensibility. They can also enhance the tackifying effect of the tackifying resin. The addition of a plasticizer can lower melt viscosity, the temperature of the second order transition point or the elastic modulus of the treated material.

Commonly employed plasticizers include compounds of the following classes: adipic acid derivatives, azeleic acid derivatives, benzoic acid derivatives, diphenyl derivatives, citric acid derivatives, epoxides, glycolates, isophthalic acid derivatives, maleic acid derivatives, phosphorous acid derivatives, phthalic acid derivatives, polyesters, trimelitates, and the like. Preferred plasticizers can be selected from any of the commercially available benzoates, hydroxylated benzoates, or the acetates or benzoates of polyols, such as the acetates or benzoates of $C_2$-$C_6$ polyols comprising about 2-6 hydroxyl groups. Such plasticizers include

acetin, glycerol tribenzoate (BENZOFLEX® S-404), or pentaerythritol tetrabenzoate (BENZOFLEX® S-552) or the mixed dibenzoates of dipropylene glycol and diethylene glycol (BENZOFLEX® 50, Velsicol Corp., Chicago, Illinois). Another useful water insoluble plasticizer is butyl benzyl phthalate, available from Monsanto Co. as SANTICIZER® 160. Additional useful plasticizers of this type include the liquid polyalkylene glycols, e.g. polyethylene glycols (PEG) of molecular weights of about 200-800, and castor oil, a glyceryl trihydroxyoleate (tririciholeate), a clear viscous light colored fluid. Castor oil is available from a variety of chemical suppliers including CasChem, Inc. of New Jersey. CasChem provides this product as a variety of products having a Stokes viscosity of 7.5, specific gravity of 0.959, an iodine value of 86, a hydroxyl value of 164, a saponification value of 180, and a pour point of -10° F.

Of the high acid plasticizers, especially suitable for use in the invention are a liquid hydroxylated fatty acid or a conjugated fatty acid, and isostearic acid. Isostearic acid is a commercially available material. One supplier is Emery Industries, Inc., of Cincinnati, Ohio. This product, sold under the mark EMERSOL 875-D, generally has an acid value of between 191.0 and 201.0, a free fatty acid value of 96-101%, a saponification value of 197-204, 3% unsaponifiable, an iodine value of no greater than 3, and a Titer of no greater than 9.0° C.

## Wax

The hot melt adhesive compositions can also contain a wax. This component can aid in viscosity control and can reduce the tendency of the adhesive to block under conditions of high temperature, pressure or high humidity. The wax will have an acid number between about 50 and 300 or a hydroxy number of at least about 160. If the plasticizer is a high acid material, more preferably the acid number will be between about 75 and 275, more preferably between about 85 and 200, or most preferably, between about 120 and 170. Lower acid number plasticizers can be insufficiently compatible with the polyalkyleneimine, while too high an acid number can result in an adhesive which corrodes hot melt equipment or can result in poor thermal stability. We have found that Hoechst "S" wax, a montan acid wax, is particularly suitable for use in this invention, for reasons of compatibility, melt point and thermal stability. It is available from American Hoechst Corporation of New Jersey. This material has a melting point of from 80-83° C., a congealing point of 76-79° C., an acid value of 140-155, and a saponification value of 160-180.

## Copolymer

The formulation may contain an ethylene-acid copolymer, to provide additional strength and toughness and increase structural resistance to cold cracking. It will have the same acid number or hydroxy number as specified previously in connection with the wax component. A particularly suitable ethylene-acid copolymer is the ELVAX® II ethylene copolymer resin available from E. I. DuPont Des Nemours & Co. This resin is an ethylene acrylic acid copolymer. The grade 5950 is especially suitable because of a high acid number, toughness and film forming properties. Typical properties of the ELVAX® II 5950 resin include an acid number of 90, melt index (G/10min) of 25, tensile strength measured at ASTM D 638-82 of 3,820 p.s.i., elongation, measured at ASTM D 638-82 of 480%, elastic (tensile) print modulus, ASTM D 638-82 of 25,000 p.s.i., flexural modulus, ASTM D 79--81, Meth. 1, Proc. A of 14,000 p.s.i., density at 23° C. of 940 kg/m$^3$, durometer hardness, Shore A-2 of 94, and softening point, ring and ball, 138° C.

## Filler

The present adhesive formulations can also comprise an effective amount of an inorganic extender or filler, such as calcium carbonate, zinc oxide, alumina, clays, titanium dioxide, talc, carbon black, and the like. For example, the adhesives formulated to be moisture-sensitive and/or repulpable can comprise up to about 35 wt-% of a mineral extender which is preferably fatty acid estercoated to increase its organophilicity. One commercially available filler of this type is the stearate-calcium carbonate compound OMYACARB® UF-T (Omya, Inc., Proctor, VT). Another commercially available filler is MINSPAR, available from Indusman. This material is a finely divided feldspar.

The hot melt adhesive compositions may also incorporate relatively small amounts of adjuvants such as UV absorbers, heat stabilizers, flavorings, release agents, additional antiblocking agents and antioxidants. Typical antioxidants include the IRGANOX® series (Ciba-Geigy) and the distearyl pentaerythritol

diphosphate (WESTON® 619, Borg-Warner Chemicals). When present, such adjuvants will commonly make up less than 5% by weight of the present adhesives.

Compatible polymers that can be included in the hot melt adhesive compositions of the invention include rubbery polymers and copolymers, acid functional polymers having an acid number of at least about 100, hydroxy(-OH) functional polymers having a hydroxyl number of about 150 or greater, nitrilo functional polymers including, for example, acrylonitrile, and other compatible polymers. Such polymers include styrene acrylic acid copolymers, ethylene acrylic acid copolymers, styrene alyl alcohol copolymers, ethylene vinyl alcohol copolymers, ethylene hydroxyethyl acrylate copolymers, ethylene hydroxyethyl methacrylate copolymers, ethylene hydroxy propyl acrylate copolymers, phenoxy resins, terpene phenolic resins, styrene acrylonitrile copolymers, styrene butadiene acrylonitrile copolymers, impact modified styrene acrylonitrile rubbers, hydrogenated nitrile rubbers, nitrile rubber wherein the nitrile polymer contains about 60 to 20 wt-% acrylonitrile; polyvinyl pyrrolidone, polyvinyl caprolactan, polyamides, made from piperazine or amine mixtures thereof; halogenated polymers, epichlorohydrin rubber, chlorinated polyolefin, vinyl chloride, vinyllidine chloride copolymers, and others.

Compositions of representative preferred adhesive formulations of the present invention are summarized in Table 1 below.

Table 1

| Typical Adhesive Formulations | | | | | | | | | | |
|---|---|---|---|---|---|---|---|---|---|---|
| Ingredient | Water Resistant; Alkali Soluble Hot Melt (Wt%) | | General Purpose Repulpable Hot Melt (Wt%) | | Moisture Activated Hot Melt (Wt%) | | General Purpose Hot Melt (PSA) (Wt%) | | Pet Base Cup (Wt%) | |
| | A* | B* | A* | B* | A* | B* | A* | B* | A* | B* |
| Polyalkyleneimine | 5-75 | 5-20 | 5-75 | 25-55 | 5-75 | 30-60 | 5-75 | 5-40 | 5-60 | 10-40 |
| Tackifying agent | 0-50 | 10-40 | 0-50 | 10-40 | 0-50 | 2-15 | 5-50 | 10-40 | 5-75 | 20-70 |
| Plasticizer | 0-50 | 0-20 | 0-50 | 0-35 | 0-50 | -- | 0-50 | 1-45 | 0-50 | 0-45 |
| Wax | 0-50 | 10-40 | 1-35 | 5-25 | 0-50 | 5-30 | 0-20 | -- | 0-50 | 1-45 |
| Filler | 0-25 | -- | 0-25 | -- | 1-25 | 2-30 | 0-25 | -- | 0-25 | 0-25 |

* A = Useful; B = Preferred.

Preparation

The hot melt adhesives of the present invention are prepared by combining the components in a hot melt condition by employing heating and mixing equipment typically employed in the formulation of compositions of the hot melt type. One preferred method involves combining the antioxidant if any, with all or a portion of the organic components, other than polyalkyleneimine polymer, and heating the mixture to a temperature at which it is a flowable liquid (200° to 350° F.). Into the stirred mixture is then added the polyalkyleneimine slowly until fully blended. Often the polyalkyleneimine and the acid functional polymer are blended and are added last.

The adhesives of this invention are applied to the substrates, e.g. cellulosics, fluorocarbon sheets, spun bonded polyester, polyester bottles, etc., in glue lines, in an extruded mass as thin films in a hot melt format. The adhesives of the invention can be used to make adherent articles by applying to at least one surface of a sheet-like material a thin film of the adhesive. Sheet-like material can be made of cellulosic materials, polymeric materials, fiberglass materials, composite graphite-polyamide fiber materials, etc. The adherent articles can be labels, tapes, structural members, etc.

Application of the adhesive to the sheet-like substrate may be by roller, dip plus doctor blade, printed dots, extrusion application wheels, or other similar, well-known apparatus.

The following Examples further illustrate a variety of the adhesives that can be made within the scope of the invention and include a best mode.

## Example I

### Alkali Dispersible Labeling Hot Melt

Into a heated mixer is placed 20 parts of a tackifying resin comprising a tall oil fatty acid (FORAL® AX) and 0.5 parts of a hindered phenolic antioxidant (IRGANOX 1076). The contents of the mixer are agitated and heated until fully melted at a temperature of about 250° F. and into the melt is added 40 parts of an ethylene-acrylic acid polymer having an acid number of 120 (AC-5120). The mixer is agitated until the contents are uniform and into the melt is placed 9.5 parts of polyethyloxazoline polymer having a molecular weight of 200,000. The mixer is operated until the melt is uniform and homogeneous and into the melt is placed 29.5 parts of a hydrogenated fatty acid triglyceride wherein the fatty acids comprise 87% ricinoleic acid, 7% oleic acid, 3% linoleic acid, 2% palmitic acid, 1% stearic acid, and trace amounts of others (CASTORWAX MP-80). The mixer is operated until uniform and the fully formulated hot melt is removed from the mixer and stored. The composition has an oven peel of 113° F., a programmed oven shear of 149° F., a 250° F. viscosity of 1300 mPa•s, and a 350° F. viscosity of 270 mPa•s.

Approximately 1 gram of the adhesive was added to a 0.5 normal sodium hydroxide solution having a pH of about 12. The composition readily dissolved under agitation. Approximately 1 gram of the composition was added to water held at a temperature of about 90° C. Some dissolution occurred over an approximately 3-hour period, while the bulk of the adhesive remained in a solid form.

## Example II

### Remoistenable Hot Melt

Into a heated reaction vessel containing a blade mixer is placed 25 parts of a tackifying resin comprising hydroxystearamide wax (PARACIN 220, Caschem) and 0.5 parts of IRGANOX 1076. The

contents of the mixer are melted and heated to a temperature of about 250° F. Into the melt is placed 4.47 parts of dimer acid (EMPOL 1014) and 5.88 parts of a glycidyl ether of bisphenol A (EPON 828). The mixer is operated until the melt is uniform and into the melt is added 1.6 parts of diethanolamine. Upon the addition of diethanolamine an exotherm occurs which drives the physical and chemical reaction. After a 1-hour reaction period, 62.5 parts of a polyethyloxazoline polymer having a molecular weight of 50,000 is slowly added over a period of approximately 1/2 hour until the melt is uniform and homogeneous. The melt is withdrawn from the mixer and packaged in 1-lb. release coated cartons. The resulting adhesive had a 350° F. viscosity of 2125 cPs and a 400° F. viscosity of 865 cPs.

## Examples III-X

Following the blending procedures shown above the following table lists pressure sensitive adhesives using polyethyloxazoline polymer and a variety of acid functional compounds, both monomeric and polymeric.

Table 2

| Ingredient | III | IV | V | VI | VII | VIII | IX | X |
|---|---|---|---|---|---|---|---|---|
| PeOx (500,000 MW) | 25.0 | 25.0 | 23.0 | 23.0 | 30.0 | 10.0 | 25.0 | 20.0 |
| Rosin acid | 38.0 | 33.0 | 30.0 | 30.0 | 30.0 | 50.0 | | 40.0 |
| Antioxidant | 2.0 | 2.0 | 2.0 | 2.0 | 2.0 | 2.0 | 2.0 | |
| Castor oil | 35.0 | 35.0 | 35.0 | 30.0 | 30.0 | 38.0 | 20.0 | |
| Feldspar (filler) | | | | 10.0 | | | 18.0 | |
| EAC* (Acid No. = 80) | | 5.0 | | 5.0 | | | | |
| EAC* (Acid No. = 120) | | | 10.0 | | | | | |
| Dimer acid | | | | | 8.0 | | | |
| Phenol-modified terpene resin | | | | | | | 25.0 | |
| Hydroxystearamide wax | | | | | | | 10.0 | |
| Isostearic acid | | | | | | | | 30.0 |
| Ethylene-acrylic acid interpolymer (Acid No. = 90) | | | | | | | | 10.0 |
| 180° Peel | | | | | | | | |
| (initial)/In.in. | 3.5 lbs. | 3.5 lbs. | 3.5 lbs. | 3.5 lbs. | | | | 2.2 lbs. |
| (24 hrs.)/In.in. | 5.5 lbs. | 5.5 lbs. | 4.5 lbs. | 6.5 lbs. | | | | |
| Static Shear | 100 min. | 150 min. | 160 min. | 200 min. | | | | 40 min. |
| Loop tack | 30 oz. | 30 oz. | 24 oz. | 26 oz. | | | | 18 oz. |
| Polyken tack | 650 | 400 | 550 | 425 | | | | 458 g |
| Viscosity, 300° F. (cPs) | 4500 | 6000 | 3250 | 8750 | | | | |

* EAC = ethylene-acrylic acid copolymer.

## Example XI

Water Dispersible Roll Wrap Adhesive

Into a heated high shear mixer is placed 30 parts of isostearic acid and 20 parts of a hydroxy wax (Hoechst S). The mixer is operated until the contents are in a uniform melt and into the melt is placed 45 parts of a polyethyloxazoline polymer having a molecular weight of about 20,000 slowly over a 1/2 hour period. After the melt is blended and uniform, into the melt is placed 5 parts of dimer acid which is agitated until smooth.

Examples XII and XIII

| Pet Base Cup | | |
|---|---|---|
| | XII | XIII |
| Polyethyloxazoline MW = 200,000 (Wt-%) | 25 | 25 |
| TACKIFIER: | | |
| PICCOFYN T-125 | 15 | |
| FORAL AX | | 25 |
| CASTOR OIL | 30 | |
| DIMER ACID | | 30 |
| ETHYLENE/ACRYLIC ACID COPOLYMER: | | |
| Acid No. = 120 | 30 | |
| Acid No. = 50 | | 20 |

These basic cup formulations provide adequate structural bonds and resist failure at low temperature under severe handling conditions.

The above specification, Examples and data provide a clear explanation of technical aspects of the invention. However, since many embodiments of the invention can be made without departing from the spirit and scope of the invention, the invention resides in the claims hereinafter appended.

**Claims**

1. A water actuated hot melt adhesive comprising:

(a) about 1-75 wt-% of an N-substituted polyalkyleneimine of the formula:

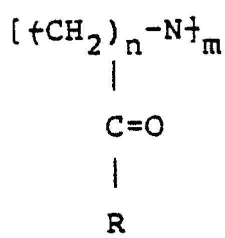

wherein n is about 2-3, m is about 100-10,000, and R is a $C_{1-15}$ alkyl group;

(b) about 2-90 wt-% of an acid functional polymeric compound; and

(c) about 0-60 wt-% of a plasticizer compound or a compatible wax compound.

2. The adhesive of claim 1 wherein the N-substituted polyalkyleneimine comprises a polyalkyloxazoline polymer.

3. The adhesive of claim 2 wherein the molecular weight of the polyalkyloxazoline polymer is about 20,000 to 600,000.

4. The adhesive of claim 2 wherein the polyalkyloxazoline polymer comprises a polyethyloxazoline polymer having a molecular weight selected from the group consisting of about 50,000, about 200,000 and about 500,000.

5. The adhesive of claim 1 wherein the acid functional polymer compound comprises a polymeric compound having carboxylic acid functionality and an acid number greater than 50.

6. The adhesive of claim 5 wherein the polymeric compound comprises a polymer containing repeating units derived from acrylic acid, methacrylic acid, maleic anhydride and mixtures thereof.

7. The adhesive of claim 6 wherein the polymer comprises an ethylene methacrylic acid copolymer having an acid number of about 75-300.

8. The adhesive of claim 7 wherein the wax compound comprises a hydroxy wax which is present at a concentration of about 10-60 wt-%.

9. The adhesive of claim 7 wherein the tackifier comprises a hydroxy functional tackifier present at a concentration of about 0-60 wt-%.

10. A water soluble pressure sensitive hot melt adhesive comprising:

(a) about 10-60 wt-% of an N-substituted polyalkyleneimine of the formula:

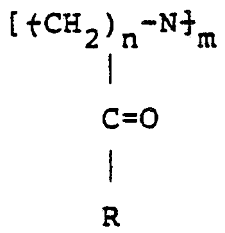

wherein n is about 2-3, m is about 100-10,000 and R is a $C_{1-15}$ alkyl;

(b) about 5-30 wt-% of an acid functional copolymer compound;

(c) about 1-35 wt-% of an acid functional plasticizer; and

(d) about 10-50 wt-% of an acid functional compatible tackifier.

11. The adhesive composition of claim 10 wherein the N-substituted polyalkyleneimine comprises a polyalkyloxazoline polymer.

12. The adhesive of claim 10 wherein the molecular weight of the polyalkyloxazoline polymer is about 20,000 to 600,000.

13. The adhesive of claim 10 wherein the polyalkyloxazoline polymer comprises a polyethyloxazoline polymer having a molecular weight selected from the group consisting of about 50,000, about 200,000 and about 500,000.

14. The adhesive of claim 10 wherein the acid functional tackifier is a rosin acid.

15. The adhesive of claim 10 wherein the acid functional copolymer comprises an ethylene methacrylic acid copolymer having an acid number of about 75-200 and a molecular weight of at least about 500.

16. The adhesive of claim 10 wherein the acid functional plasticizer is isostearic acid.

European Patent Office

# EUROPEAN SEARCH REPORT

Application Number

EP 88 11 0091

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 199 468 (H.B. FULLER CO.)<br>* Claims 1-16 *<br>--- | 1-16 | C 09 J 3/16<br>C 08 G 73/04<br>C 08 L 79/02 |
| A | EP-A-0 212 135 (NATIONAL STARCH AND CHEMICAL CORP.)<br>* Claims 1-10 *<br>----- | 1-16 | |
| | | | TECHNICAL FIELDS SEARCHED (Int. Cl.4) |
| | | | C 08 L<br>C 09 J |

The present search report has been drawn up for all claims

| Place of search | Date of completion of the search | Examiner |
|---|---|---|
| THE HAGUE | 22-09-1988 | GLANDDIER A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)